# FASCICULE DE BREVET EUROPEEN

(11) **EP 1 302 366 B1**
(45) Date de publication et mention de la délivrance du brevet: **28.12.2005**
(21) Numéro de dépôt: 02292510.1
(22) Date de dépôt: 11.10.2002
(51) Int. Cl.: B60R 7/04

(54) **Habitacle de véhicule automobile avec dispositif d'aménagement d'un volume de rangement**
Kraftfahrzeuginnenraum mit Einbauvorrichtung für einen Ablagebehälter
Vehicle interior with installation of a storage device

(30) Priorité: 12.10.2001 FR 0113208
(43) Date de publication de la demande: 16.04.2003
(73) Titulaire: Peugeot Citroen Automobiles SA, 92200 Neuilly sur Seine (FR)
(72) Inventeur: Valente, Enzo Patrick, 94320 Thiais (FR)
(74) Mandataire: Thinat, Michel

(56) Documents cités:
- FR-A- 2 724 606
- US-A- 5 178 434
- US-A- 6 145 907
- PATENT ABSTRACTS OF JAPAN vol. 018, no. 521 (M-1681), 30 septembre 1994 (1994-09-30) & JP 06 179381 A (MAZDA MOTOR CORP), 28 juin 1994 (1994-06-28)
- PATENT ABSTRACTS OF JAPAN vol. 1996, no. 08, 30 août 1996 (1996-08-30) & JP 08 092999 A (YUTANI HEAVY IND LTD), 9 avril 1996 (1996-04-09)
- R ALISATION MUNDOCOM: "Renault Espace" septembre 2001 (2001-09), CR ATION PUBLICIS CONSEIL , CE J66 B1 AL1

## Description

La présente invention concerne, de façon générale, l'ergonomie et l'aménagement intérieur des véhicules automobiles.

Plus précisément, l'invention concerne un habitacle de véhicule automobile conforme au préambule de la revendication 1.

Bien que de nombreuses dispositions aient déjà été imaginées pour augmenter le volume de rangement disponible dans l'habitacle d'un véhicule automobile sans accroître le volume de l'habitacle lui-même, cette optimisation ergonomique continue de faire l'objet de développements nombreux.

US-A-6 145 907 décrit un habitacle de véhicule automobile comprenant les caractéristiques du préambule de la revendication 1.

Cependant, selon ce document antérieur, la dépression servant à loger l'objet constitué par exemple par la roue de secours du véhicule, est obturable par un couvercle articulé à demeure à la structure du plancher par l'intermédiaire d'au moins un élément transversal de cette structure. Cette disposition conduit à une complication de structure du plancher de véhicule, augmentant les coûte du véhicule.

La présente invention a pour but d'aménager un volume de rangement supplémentaire, qui soit à la fois aisément accessible, d'usage très commode, ne compliquant pas la structure de plancher du véhicule et, par conséquent peu coûteux.

A cette fin, l'habitacle de véhicule automobile de l'invention comprend les caractéristiques de la partie caractérisante de la revendication 1.

Bien que l'usage d'une mallette adaptée à un véhicule soit déjà enseigné au moins par le document de brevet WO 01/21441, le dispositif décrit dans ce document antérieur vise seulement à faciliter le chargement du véhicule, n'est pas accessible de l'habitacle, et occupe un volume qui vient réduire le volume disponible dans le coffre de ce véhicule.

Au moins deux paliers d'articulation portés par la partie antérieure fixe de la face supérieure de la mallette, sont disposés dans la coque, et définissent un axe d'articulation, et deux pattes d'articulation recourbées, portées par la partie postérieure mobile de la face supérieure de la mallette, sont montées pivotantes sur les paliers d'articulation respectifs, les deux parties de la face supérieure de la mallette étant, en position fermée du couvercle, sensiblement coplanaires, jointives, et dépourvues de liaison visible de l'extérieur de la mallette.

Dans ce cas, les deux parties de la face supérieure de la mallette sont par exemple délimitées par des bords courbes respectifs mutuellement adjacents en position fermée du couvercle et de courbures complémentaires.

Une butée portée par la partie antérieure fixe de la face supérieure de la mallette, est disposée dans la coque, et offre, en position fermée du couvercle, un appui à la partie postérieure mobile de la face supérieure de la mallette suivant une direction perpendiculaire à cette face.

La mallette comporte de préférence une poignée disposée à distance de la partie antérieure fixe de sa face supérieure, cette poignée comprenant par exemple un élément de poignée fixe, solidaire de la coque, et un élément de poignée mobile, formé dans la partie postérieure mobile de la face supérieure de la mallette, et les deux éléments de poignée étant superposés pour la position fermée du couvercle.

Enfin, il est possible d'offrir un plus grand espace au passager qui est assis derrière le premier siège avant du véhicule ainsi équipé en donnant à la dépression une profondeur supérieure à l'épaisseur que présente la mallette.

En variante, il est néanmoins possible de prévoir que la face supérieure de la mallette affleure au niveau du plancher du véhicule pour former avec le plancher une surface plane uniforme.

D'autres caractéristiques et avantages de l'invention ressortiront clairement de la description qui en est faite ci-après, à titre indicatif et nullement limitatif, en référence aux dessins annexés, dans lesquels:
- la Figure 1 est une vue partielle en perspective d'un habitacle de véhicule automobile, équipé du dispositif de l'invention;
- la Figure 2 est une vue en perspective de la mallette utilisée dans le dispositif de l'invention;
- la Figure 3 est une vue en perspective d'une coupe longitudinale de la mallette illustrée à la figure 2;
- la Figure 4 est une vue en perspective de la face supérieure de la mallette, supposée démontée et observée de l'intérieur de la mallette; et
- la Figure 5 est une vue latérale agrandie d'une articulation utilisable dans la mallette illustrée aux figures 2 et 3.

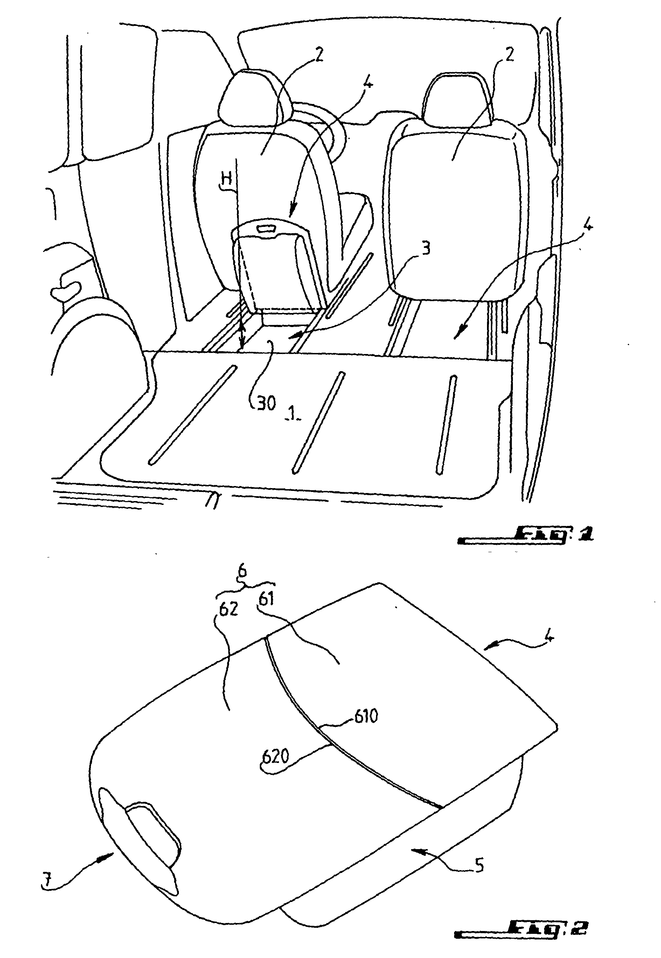

Comme annoncé précédemment, l'invention concerne un dispositif d'aménagement d'un volume de rangement pour un habitacle de véhicule automobile (figure 1).

Un tel habitacle est typiquement délimité par un plancher 1 et comprend par exemple deux sièges avant 2.

De façon également classique, chacun des sièges 2 est monté coulissant sur le plancher entre une position avancée et une position reculée, pour permettre de s'adapter à la morphologie du conducteur et du passager avant.

Le dispositif d'aménagement de l'invention comprend principalement une dépression 3 formée dans le plancher 1 et délimitée par un fond 30, et une mallette amovible 4 qui peut être rangée dans cette dépression 3.

Pour optimiser le gain de place recherché tout en offrant un accès à l'intérieur de la mallette sans obligation de la déplacer, la dépression est disposée au moins partiellement sous le siège correspondant 2 lorsque ce dernier est en position reculée, et est disposée au moins partiellement derrière ce siège 2 lorsque ce dernier est en position avancée.

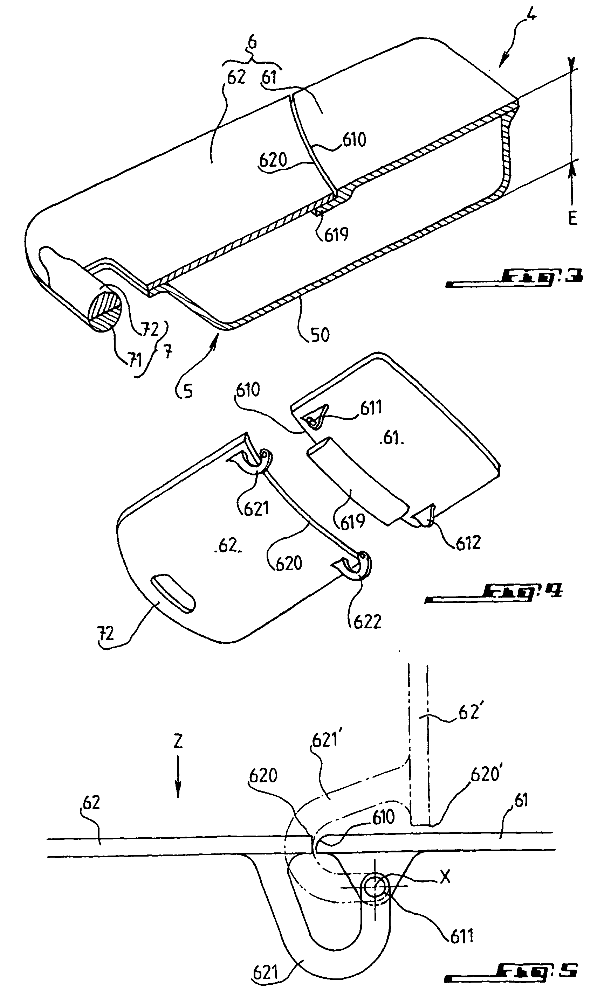

La mallette 4 (figures 2 et 3) comprend une coque rigide 5, et présente une face inférieure 50 et une face supérieure 6.

La face inférieure 50 constitue un fond pour la coque 5 et permet de poser la mallette 4 à plat sur le fond 30 de la dépression 3.

La face supérieure 6 de la mallette 4 peut former un couvercle pour la mallette 4, ou comporter un tel couvercle, comme le montrent les figures.

Dans ce dernier cas, la face supérieure 6 de la mallette 4 comprend une partie antérieure 61 et une partie postérieure 62.

La partie antérieure 61 est fixe par rapport à la coque 5, et par exemple soudée à celle-ci, notamment dans le cas où la mallette est réalisée dans un polymère thermoplastique.

La partie postérieure 62 de la face supérieure 6 de la mallette 4 est en revanche mobile par rapport à la coque 5, entre une position fermée et une position ouverte, et forme ainsi le couvercle proprement dit de la mallette.

Pour optimiser l'accès à l'intérieur de la mallette, la partie postérieure mobile 62 de la face supérieure 6 de la mallette 4 est de préférence disposée derrière le siège correspondant 2, au moins en position avancée de ce siège, la partie antérieure fixe 61 de la face supérieure 6 de la mallette 4 pouvant quant à elle être disposée sous ce même siège 2, au moins en position reculée de ce dernier.

Comme le montrent les figures 4 et 5, la partie postérieure formant couvercle 62 peut être articulée sur la partie antérieure fixe 61 au moyen de deux paliers d'articulation, 611 et 612, portés par cette partie antérieure fixe 61, et de deux pattes d'articulation recourbées, 621 et 622, portées par la partie postérieure formant couvercle 62.

Les paliers d'articulation 611 et 612 sont disposés à l'intérieur de la coque 5 et définissent un axe d'articulation X, les pattes d'articulation recourbées 621 et 622 étant montées pivotantes sur les paliers d'articulation respectifs 611 et 612.

De cette manière, en position fermée du couvercle 62, la partie fixe 61 et le couvercle 62 qui forment ensemble la face supérieure 6 de la mallette 4 sont sensiblement coplanaires, jointives par leurs bords respectifs 610 et 620, et dépourvues de liaison visible de l'extérieur de la mallette 4.

Le couvercle 62, lorsqu'il est ouvert (figure 5), adopte une position 62', la patte d'articulation recourbée 621 adoptant alors la position 621', et le bord 620 la position 620'.

Dans cette configuration, chacune des deux pattes, telles que 621, contourne le bord 610 de la partie fixe 61 pour relier le bord 620 du couvercle, alors situé au-dessus de la partie fixe 61, à l'axe d'articulation X, qui est disposé à l'intérieur de la coque 5.

Les bords 610 et 620 des parties 61 et 62, qui sont mutuellement adjacents en position fermée du couvercle 62, peuvent être courbes et présenter des courbures complémentaires, la concavité d'un bord s'inscrivant dans la convexité de l'autre bord.

La partie antérieure fixe 61 de la face supérieure 6 de la mallette 4 peut comprendre, au moins sur la partie médiane de son bord 610, une butée 619 disposée à l'intérieur de la coque 5 et s'étendant vers la partie formant couvercle 62.

En position fermée du couvercle 62, cette butée 619 offre ainsi un appui à ce couvercle 62 suivant la direction Z perpendiculaire à cette face 6 (figure 5), de sorte qu'une force exercée sur le couvercle 62 suivant cette direction est transmise à la partie antérieure fixe 61 de la face supérieure 6 de la mallette 4 par la butée 619.

La mallette 4 comporte avantageusement une poignée 7, disposée à distance de la partie antérieure fixe 61 de sa face supérieure 6, et par exemple formée de deux éléments de poignée 71 et 72 qui sont superposés pour la position fermée du couvercle 62.

L'élément de poignée 71 est solidaire de la coque 5 et donc fixe par rapport à celle-ci et à la coque 5, tandis que l'élément de poignée 72 est formé dans la partie 62 formant couvercle, et donc mobile par rapport à l'élément de poignée 71.

Enfin, la dépression 3 correspondant à chaque siège avant 2 (figure 1) peut avoir une profondeur H supérieure à l'épaisseur E que présente la mallette (figure 3), de sorte que le passager assis derrière ce siège dispose d'un espace plus important pour ses pieds.

Néanmoins, la face supérieure 6 de la mallette peut aussi affleurer au niveau du plancher 1 pour former avec lui une surface plane uniforme.

## Revendications

1. Habitacle de véhicule automobile ayant un plancher (1) avec un volume de rangement sous forme de dépression (3) formée dans le plancher (1) dans laquelle est logé un objet, la dépression étant délimitée par un fond (30) et disposée au moins partiellement sous un premier siège avant (2) en position reculée de celui-ci et partiellement derrière le premier siège avant (2) en position avancée de celui-ci, **caractérisé en ce que** l'objet est une mallette amovible (4) comprenant une coque rigide (5) et présentant une face inférieure (50) et une face supérieure (6), la face inférieure (50) constituant un fond pour la coque (5) et permettant de poser la mallette (4) à plat sur le fond (30) de la dépression (3), et la face supérieure (6) formant ou comportant un couvercle (62) pour la mallette (4), **en ce que** la face supérieure (6) de la mallette (4) comprend une partie antérieure (61), qui est fixe par rapport à la coque (5), et une partie postérieure (62), qui forme le couvercle et qui est mobile par rapport à la coque (5) entre une position fermée et une position ouverte, **en ce que** la partie antérieure fixe (61) de la face supérieure (6) de la mallette (4) est disposée sous le premier siège (2), au moins en position reculée de ce premier siège (2), et **en ce que** la partie postérieure mobile (62) de la face supérieure (6) de la mallette (4) est disposée derrière le premier siège (2), au moins en position avancée de ce premier siège (2).

2. Habitacle selon la revendication 1, **caractérisé en ce que** la partie antérieure fixe (61) de la face supérieure (6) de la mallette (4) comprend au moins deux paliers d'articulation (611, 612) disposés dans la coque (5), et définissant un axe d'articulation (X), et **en ce que** la partie postérieure mobile (62) de la face supérieure (6) de la mallette (4) comprend deux pattes d'articulation recourbées (621, 622) et montées pivotantes sur les paliers d'articulation respectifs (611, 612), les deux parties (61, 62) de la face supérieure (6) de la mallette (4) étant, en position fermée du couvercle (62), sensiblement coplanaires, jointives, et dépourvues de liaison visible de l'extérieur de la mallette (4).

3. Habitacle selon la revendication 2, **caractérisé en ce que** les deux parties (61, 62) de la face supérieure (6) de la mallette (4) sont délimitées par des bords courbes respectifs (610, 620) mutuellement adjacents en position fermée du couvercle (62) et de courbures complémentaires.

4. Habitacle selon l'une quelconque des revendications 1 à 3, **caractérisé en ce que** la la partie antérieure fixe (61) de la face supérieure (6) de la mallette (4) comprend une butée (619) disposée dans la coque (5), et offrant, en position fermée du couvercle (62), un appui à la partie postérieure mobile (62) de la face supérieure (6) de la mallette (4) suivant une direction (Z) perpendiculaire à cette face (6).

5. Habitacle selon l'une quelconque des revendications précédentes, **caractérisé en ce que** la mallette (4) comporte une poignée (7) disposée à distance de la partie antérieure fixe (61) de sa face supérieure (6).

6. Habitacle selon la revendication 5, **caractérisé en ce que** la poignée de la malette (4) comprend un élément de poignée fixe (71), solidaire de la coque (5), et un élément de poignée mobile (72), formé dans la partie postérieure mobile (62) de la face supérieure (2) de la mallette (4), les deux éléments de poignée (71, 72) étant superposés pour la position fermée du couvercle (62).

7. Habitacle selon l'une quelconque des revendications précédentes, **caractérisé en ce que** la dépression (3) et la mallette (4) présentent respectivement une profondeur déterminée (H) et une épaisseur déterminée (E), et **en ce que** la profondeur (H) de la dépression (3) est supérieure à l'épaisseur (E) de la mallette (4).

8. Habitacle selon l'une quelconque des revendications 1 à 6, **caractérisé en ce que** la face supérieure (6) de la mallette (4) affleure au niveau du plancher (1).

## Patentansprüche

1. Fahrgastraum eines Kraftfahrzeugs mit einem Fahrzeugboden (1), der einen Stauraum in Form einer im Fahrzeugoden (1) ausgeführten Vertiefung (3) aufweist, in dem ein Gegenstand untergebracht ist, wobei die Vertiefung durch einen Boden (30) begrenzt ist und zumindest teilweise unter einem ersten Vordersitz (2) in seiner zurückgefahrenen Position und teilweise hinter dem ersten Vordersitz (2) in seiner vorgefahrenen Position angeordnet ist,
**dadurch gekennzeichnet,**
**daß** es sich bei dem Gegenstand um einen herausnehmbaren Kofferkasten (4) handelt, der eine starre Schale (5) umfaßt und eine Unterseite (50) und eine Oberseite (6) aufweist, wobei die Unterseite (50) einen Boden für die Schale (5) bildet und das flache Ablegen des Kofferkastens (4) auf dem Boden (30) der Vertiefung (3) erlaubt und die Oberseite (6) einen Deckel (62) für den Kofferkasten (4) bildet oder umfaßt, **dadurch**, daß die Oberseite (6) des Kofferkastens (4) einen vorderen Teil (61) aufweist, der im Verhältnis zur Schale (5) feststehend ist, und einen hinteren Teil (62), der den Deckel bildet und der im Verhältnis zur Schale (5) zwischen einer geschlossenen und einer offenen Stellung beweglich ist, **dadurch**, daß der feststehende vordere Teil (61) der Oberseite (6) des Kofferkastens (4) unter dem ersten Sitz (2) angeordnet ist, zumindest in der zurückgefahrenen Position dieses ersten Sitzes (2), und **dadurch**, daß der bewegliche hintere Teil (62) der Oberseite (6) des Kofferkastens (4) hinter dem ersten Sitz (2) angeordnet ist, zumindest in der vorgefahrenen Position dieses ersten Sitzes (2).

2. Fahrgastraum nach Anspruch 1, **dadurch gekennzeichnet, daß** der feststehende vordere Teil (61) der Oberseite (6) des Kofferkastens (4) zumindest zwei in der Schale (5) angeordnete Gelenklager (611, 612) umfaßt, die eine Gelenkachse (X) definieren, und **dadurch**, daß der bewegliche hintere Teil (62) der Oberseite (6) des Kofferkastens (4) zwei gekrümmte und schwenkbar auf den Gelenklagern (611, 612) montierte Gelenkklauen (621, 622) umfaßt, wobei die beiden Teile (61, 62) der Oberseite (6) des Kofferkastens (4) in der geschlossenen Stellung des Deckels (62) im wesentlichen koplanar aneinanderstoßen und keine von außerhalb des Kofferkastens (4) sichtbare Verbindung aufweisen.

3. Fahrgastraum nach Anspruch 1, **dadurch gekennzeichnet, daß** die beiden Teile (61, 62) der Oberseite (6) des Kofferkastens (4) durch in der geschlossenen Stellung des Deckels (62) aneinander angrenzende, gebogene Ränder (610, 620) mit komplementärer Krümmung begrenzt sind.

4. Fahrgastraum nach einem der Ansprüche 1 bis 3, **dadurch gekennzeichnet, daß** der feststehende vordere Teil (61) der Oberseite (6) des Kofferkastens (4) einen in der Schale (5) angeordneten und in der geschlossenen Stellung des Deckels (62) eine Abstützung für den beweglichen hinteren Teil (62) der Oberseite (6) des Kofferkastens (4) bereitstellenden Anschlag (619) in einer senkrecht zu dieser Seite verlaufenden Richtung (Z) umfaßt.

5. Fahrgastraum nach einem der vorhergehenden Ansprüche, **dadurch gekennzeichnet, daß** der Kofferkasten (4) einen vom feststehenden vorderen Teil (61) seiner Oberseite (6) entfernt angeordneten Handgriff (7) umfaßt.

6. Fahrgastraum nach Anspruch 5, **dadurch gekennzeichnet, daß** der Handgriff des Kofferkastens (4) ein feststehendes, mit der Schale fest verbundenes Handgriffelement (71) und ein bewegliches, im beweglichen hinteren Teil (62) der Oberseite (6) des Kofferkastens ausgeführtes Handgriffelement (72) umfaßt, wobei die beiden Handgriffelemente (71, 72) zum Erreichen der geschlossenen Stellung des Deckels (62) übereinanderliegen.

7. Fahrgastraum nach einem der vorhergehenden Ansprüche, **dadurch gekennzeichnet, daß** die Vertiefung (3) und der Kofferkasten (4) jeweils eine bestimmte Tiefe (H) und eine bestimmte Dicke (E) aufweisen, und **dadurch**, daß die Tiefe (H) der Vertiefung (3) größer ist als die Dicke (E) des Kofferkastens (4).

8. Fahrgastraum nach einem der Ansprüche 1 bis 6, **dadurch gekennzeichnet, daß** die Oberseite (6) des Kofferkastens (4) mit der Ebene des Fahrzeugbodens (1) bündig ist.

## Claims

1. A motor vehicle passenger compartment having a floor (1) with a storage space in the form of a depression (3) formed in the floor (1) and in which an object is accommodated, the depression being delimited by a bottom (30) and disposed at least partly under a first front seat (2) in a rearward position thereof and partly behind the first front seat (2) in a forward position thereof, **characterised in that** the object is a removable case (4) comprising a rigid shell (5) and having a lower face (50) and an upper face (6), the lower face (50) constituting a bottom of the shell (5) and enabling the case (4) to be placed flat on the bottom (30) of the depression (3) and the upper face (6) forming or including a lid (62) for the case (4), **in that** the upper face (6) of the case (4) comprises an anterior portion (61) that is fixed relative to the shell (5) and a posterior portion (62) that forms the lid and is mobile relative to the shell (5) between a closed position and an open position, **in that** the fixed anterior portion (61) of the upper face (6) of the case (4) is disposed under the first seat (2), at least in the rearward position of that first seat (2), and **in that** the mobile posterior portion (62) of the upper face (6) of the case (4) is disposed behind the first seat (2), at least in the forward position of that first seat (2).

2. A passenger compartment according to claim 1, **characterised in that** the fixed anterior portion (61) of the upper face (6) of the case (4) comprises at least two articulation bearings (611, 612) disposed in the shell (5) and defining an articulation axis (X) and **in that** the mobile posterior portion (62) of the upper face (6) of the case (4) comprises two curved articulation lugs (621, 622) mounted to pivot on the respective articulation bearings (611, 612), the two portions (61, 62) of the upper face (6) of the case (4) being, in the closed position of the lid (62), substantially coplanar, contiguous and free of any connection visible from the exterior of the case (4).

3. A passenger compartment according to claim 2, **characterised in that** the two portions (61, 62) of the upper face (6) of the case (4) are delimited by respective curved edges (610, 620) that are mutually adjacent in the closed position of the lid (62) and have complementary curvatures.

4. A passenger compartment according to any one of claims 1 to 3, **characterised in that** the fixed anterior portion (61) of the upper face (6) of the case (4) comprises an abutment (619) disposed in the shell (5) and, in the closed position of the lid (62), providing a support for the mobile posterior portion (62) of the upper face (6) of the case (4) in a direction (Z) perpendicular to that face (6).

5. A passenger compartment according to any one of the preceding claims, **characterised in that** the case (4) includes a handle (7) at a distance from the fixed anterior portion (61) of its upper face (6).

6. A passenger compartment according to claim 5, **characterised in that** the handle of the case (4) comprises a fixed handle member (71) fastened to the shell (5) and a mobile handle member (72) formed in the mobile posterior portion (62) of the upper face (2) of the case (4), the two handle members (71, 72) being superposed in the closed position of the lid (62).

7. A passenger compartment according to any one of the preceding claims, **characterised in that** the depression (3) and the case (4) have a particular depth (H) and a particular thickness (E), respectively, and **in that** the depth (H) of the depression (3) is greater than the thickness (E) of the case (4).

8. A passenger compartment according to any one of claims 1 to 6, **characterised in that** the upper face (6) of the case (4) is flush with the floor (1).
